# FASCICULE DE BREVET EUROPEEN

(11) **EP 2 771 264 B1**
(45) Date de publication et mention de la délivrance du brevet: **12.07.2017**
(21) Numéro de dépôt: 12779058.2
(22) Date de dépôt: 26.10.2012
(51) Int. Cl.: B65G 47/31, B65G 47/84

(54) **DISPOSITIF DE TRANSFERT D'ARTICLES ENTRE DES MACHINES A DEPLACEMENT INTERMITTENT ET A DEPLACEMENT CONTINU ET INSTALLATION DE CONDITIONNEMENT CORRESPONDANTE**
VORRICHTUNG ZUR ÜBERTRAGUNG VON OBJEKTEN ZWISCHEN MASCHINEN ZUR INTERMITTIERENDEN BEWEGUNG DIESER OBJEKTE UND MASCHINEN ZUR KONTINUIERLICHEN BEWEGUNG DER OBJEKTE SOWIE ENTSPRECHENDE VERPACKUNGSVORRICHTUNG
DEVICE FOR TRANSFERRING ITEMS BETWEEN MACHINES FOR MOVING THE ITEMS INTERMITTENTLY AND MACHINES FOR MOVING THE ITEMS CONTINUOUSLY, AND CORRESPONDING PACKAGING EQUIPMENT

(30) Priorité: 26.10.2011 FR 1159736
(43) Date de publication de la demande: 03.09.2014
(73) Titulaire: Serac Group, 72400 La Ferté-Bernard (FR)
(72) Inventeur: BRUNEE, Jacky, 72260 Marolles-les-Braults (FR)
(74) Mandataire: Lavialle, Bruno François Stéphane
(86) Numéro de dépôt international: PCT/EP2012/071312
(87) Numéro de publication internationale: WO 2013/060875

(56) Documents cités:
- EP-A1- 0 806 383
- EP-A1- 1 790 593
- WO-A1-2011/040810
- DE-A1- 2 702 395
- DE-A1- 19 542 647
- NL-C- 66 033
- US-A- 3 330 400
- US-A1- 2003 173 186
- US-A1- 2004 112 714

## Description

La présente invention concerne le transfert d'articles, et notamment de récipients, entre des machines mettant en oeuvre des déplacements des articles selon des mouvements et des pas différents.

L'invention est plus particulièrement applicable aux installations de conditionnement de produits dans des récipients, comprenant une machine de soufflage des récipients et une machine de remplissage et de bouchage des récipients.

La machine de soufflage à mouvement intermittent comprend généralement un convoyeur d'entrée amenant des préformes réalisées par injection, un four de chauffage de ces préformes, des buses de soufflage montées en regard de moules pour injecter de l'air dans les préformes chauffées reçues dans les moules, et un convoyeur de sortie pour évacuer les récipients. Dans certaines machines, pour des raisons liées au procédé de soufflage mis en oeuvre, les moules sont alimentés simultanément en préformes de telle manière que plusieurs récipients puissent être soufflés simultanément avant d'être évacués. Dans ces machines, le convoyeur de sortie est par exemple formé d'un peigne animé d'un mouvement rectiligne intermittent du type à pas de pèlerin pour évacuer les récipients par lots correspondant au nombre de récipients simultanément soufflés.

La machine de remplissage et de bouchage à mouvement continu comprend généralement un dispositif de transport des récipients qui est pourvu de pinces de préhension des récipients et qui passe sous des buses de remplissage puis sous des broches de bouchage desdits récipients.

Dans de telles installations, il est fréquent que les pas d'avancement des récipients ne soient pas identiques dans les deux machines, la machine de remplissage et de bouchage nécessitant un pas plus important. Il est donc courant qu'un convoyeur de stockage temporaire soit interposé entre les deux machines. Ce convoyeur de stockage intermédiaire est encombrant et coûteux. Le document DE 195 42 647 Al décrit un dispositif de transfert de récipients entre deux convoyeurs selon le préambule de la revendication 1. Un but de l'invention est de fournir un moyen pour améliorer le transfert d'articles entre deux machines fonctionnant avec des mouvements et des pas d'avancement différents.

A cet effet, on prévoit, selon l'invention, un dispositif de transfert d'articles entre une première machine fonctionnant avec un déplacement intermittent des articles selon un premier pas prédéterminé et une seconde machine fonctionnant avec un déplacement continu des articles selon un deuxième pas prédéterminé. Le dispositif comprend un convoyeur souple s'étendant autour d'au moins deux poulies pour avoir au moins un tronçon rectiligne en regard d'un convoyeur de la première machine et un tronçon arrondi en regard d'un convoyeur de la deuxième machine, le convoyeur souple du dispositif portant en saillie latérale des organes de prise en charge des articles fixés à intervalles réguliers de telle manière que les organes de prise en charge aient un pas correspondant au premier pas dans ledit tronçon rectiligne et ledit tronçon arrondi a un rayon tel que les organes de prise en charge aient un pas correspondant au deuxième pas dans le tronçon arrondi.

Ainsi, la courbure du convoyeur souple dans le tronçon arrondi provoque une augmentation de l'écartement des extrémités libres des organes de prise en charge les unes par rapport aux autres et donc une augmentation du pas par rapport au pas des organes de prise en charge dans le tronçon rectiligne. Le passage des articles d'un tronçon à l'autre entraîne donc une mise au pas de ceux-ci. Le dispositif selon l'invention comprend au moins un rail de guidage auquel les articles sont suspendus, le rail de guidage s'étendant le long du tronçon rectiligne et le long d'au moins une partie du tronçon arrondi et les organes de prise en charge sont agencés pour être mobiles entre une position active pour prendre contact avec les articles et une position inactive escamotés dans laquelle les articles échappent au contact des organes de prise en charge.

L'invention a également pour objet une installation de conditionnement comprenant une machine de soufflage de récipients avec un convoyeur de sortie à déplacement rectiligne intermittent selon un premier pas prédéterminé, une machine de remplissage des récipients avec un convoyeur d'entrée à déplacement rotatif continu, et un dispositif de transfert du type ci-dessus installé entre la machine de soufflage et la machine de remplissage de telle manière que le tronçon rectiligne s'étende en regard du convoyeur de sortie de la machine de soufflage et le tronçon arrondi soit tangent au convoyeur d'entrée de la machine de remplissage, le dispositif comprenant une poulie motrice pilotée par la machine de remplissage.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique de dessus d'une installation conforme à l'invention ;
- la figure 2 est une vue en perspective d'une installation selon un premier mode de réalisation de l'invention, avant le chargement d'un lot de récipients sur le convoyeur souple ;
- la figure 3 est une vue en perspective de cette même installation au cours du chargement des récipients ;
- la figure 4 est une vue analogue à la figure 3 de cette installation après le chargement des récipients sur le convoyeur souple ;
- la figure 5 est une vue de détail en perspective de la zone de déchargement du dispositif de transfert ;
- la figure 6 est une vue partielle, schématique et de dessus, d'une installation selon un deuxième mode de réalisation, immédiatement avant le chargement d'un lot de récipients sur le convoyeur souple ;
- la figure 7 est une vue analogue à la figure 6 de cette installation immédiatement après le chargement des récipients sur le convoyeur souple ;
- la figure 8 est une vue en perspective d'une installation selon un troisième mode de réalisation de l'invention.

L'installation conforme à l'invention qui est décrite ici est une installation de conditionnement de récipients comportant un corps surmonté d'un goulot en saillie duquel s'étend une collerette.

En référence aux figures, l'installation conforme à l'invention comprend une machine 100 de soufflage de récipients, une machine 200 de remplissage des récipients et un dispositif de transfert 300.

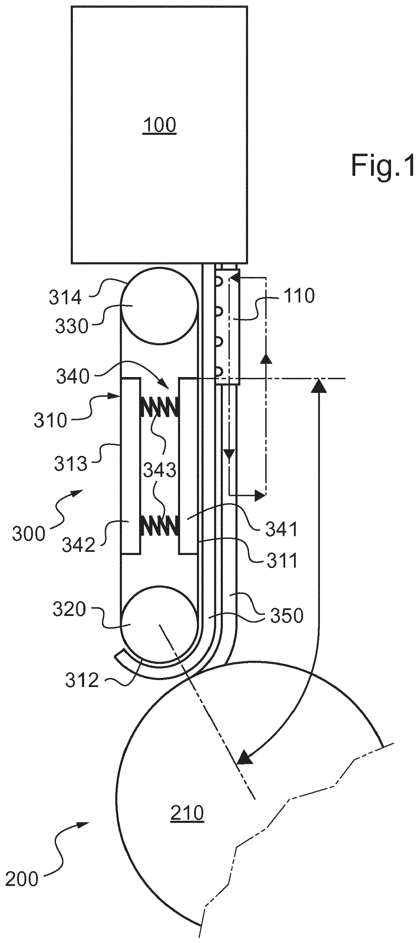

La machine 100 comprend un convoyeur d'entrée amenant dans des moules des préformes réalisées par injection, un four de chauffage des préformes, des buses de soufflage montées en regard des moules pour injecter de l'air dans les préformes reçues dans les moules, et un convoyeur de sortie pour évacuer les récipients. Les moules sont ici disposés selon une ligne et sont alimentés simultanément en récipients de telle manière que plusieurs récipients puissent être soufflés simultanément avant d'être évacués. La machine 100 comprend un convoyeur de sortie 110 ici formé d'un peigne animé d'un mouvement rectiligne intermittent du type à pas de pèlerin selon une trajectoire rectangulaire représentée en trait mixte double sur la figure 1. Le peigne est pourvu d'autant d'alvéoles de réception de récipients que la machine 100 compte de moules. Le convoyeur de sortie 110 peut ainsi évacuer les récipients par lots correspondant au nombre de récipients simultanément soufflés. La machine 100 est connue en elle-même de sorte que seule la partie directement en interaction avec le dispositif de transfert de l'invention est ici représentée, à savoir le convoyeur de sortie 110. Le convoyeur de sortie 110 à déplacement rectiligne intermittent fonctionne selon un premier pas prédéterminé.

La machine 200 comprend un convoyeur d'entrée 210, ici une plateforme rotative, qui est pourvu de pinces de préhension des récipients disposées à l'aplomb de buses de remplissage des récipients. La machine 200 est connue en elle-même de sorte que seule la partie directement en interaction avec le dispositif de transfert de l'invention est ici représentée, à savoir le convoyeur d'entrée 210. Le convoyeur d'entrée 210 fonctionne selon un mouvement rotatif continu à un deuxième pas prédéterminé.

Le dispositif de transfert 300 comprend un convoyeur souple 310 s'étendant autour de deux poulies 320, 330 pour avoir deux tronçons rectilignes 311, 313, entre les poulies 320, 330, et deux tronçon arrondis 312, 314 respectivement autour de la poulie 320 et de la poulie 330. Le dispositif de transfert 300 est disposé de telle manière que le tronçon rectiligne 311 s'étendent tangentiellement à une portion terminale du convoyeur 110 de la première machine 100 et le tronçon arrondi 312 s'étende tangentiellement à une portion du convoyeur 310 de la deuxième machine 300. La poulie 320 est une poulie motrice pilotée par la machine 200 de sorte que le tronçon rectiligne 311 du convoyeur souple 310 soit tendu.

Le dispositif de transfert 300 comprend un moyen, généralement en 340, de guidage et de tension du convoyeur souple 310. Le moyen de guidage et de tension comporte un patin fixe 341 offrant un appui au tronçon rectiligne 311 et un patin mobile 342 offrant un appui au tronçon rectiligne 313. Entre les deux patins 341, 342 sont montés des moyens d'entretoisement élastique ici constitués de ressorts 343 assurant un maintien en tension du convoyeur souple 310.

Deux rails de guidage 350 s'étendent parallèlement l'un à l'autre depuis la machine 100 jusqu'à la machine 200 le long du tronçon rectiligne 311 et d'une partie du tronçon arrondi 312. Les rails de guidage 350 sont séparés par un espace ayant une largeur comprise entre le diamètre du goulot des récipients et le diamètre de la collerette de ceux-ci de sorte que les récipients puissent être suspendus aux rails de guidage 350 par leur collerette.

Le convoyeur souple 310 porte, en saillie latérale, des organes de prise en charge 360 des récipients. Les organes de prise en charge 360 sont fixés à intervalles réguliers de telle manière que les organes de prise en charge 360 aient un pas correspondant au premier pas dans le tronçon rectiligne 311. La poulie 320, et donc le tronçon arrondi 312, ont un rayon tel que les organes de prise en charge 360 aient un pas correspondant au deuxième pas dans le tronçon arrondi 312.

Le convoyeur souple 310 est ici une chaîne ayant des maillons sur chacun desquels est monté un des organes de prise en charge 360.

Chaque organe de guidage 360 est monté sur le convoyeur souple 310 pour être mobile entre une position active dans lequel l'organe de prise en charge 360 s'étend au voisinage des rails de guidage 350 pour pousser les récipients le long des rails de guidage 350 et une position inactive escamotée dans lesquels les récipients supportés par les rails de guidage 350 échappent au contact des organes de prise en charge 360.

Le dispositif de transfert comprend des moyens de commande des organes de prise en charge 360 agencés pour amener les organes de prise en charge 360 en position active dans une zone T de transfert s'étendant à cheval sur une partie du tronçon rectiligne 311 et une partie adjacente du tronçon arrondi 312 et en position inactive hors de cette zone.

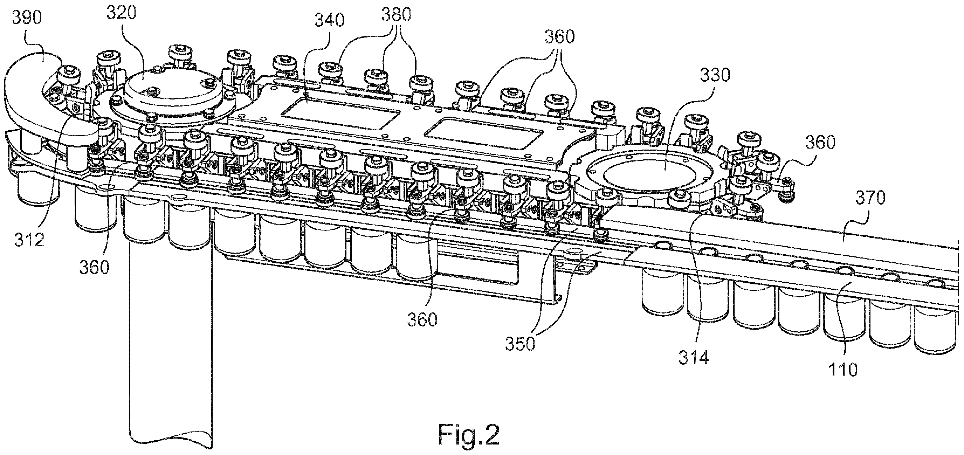

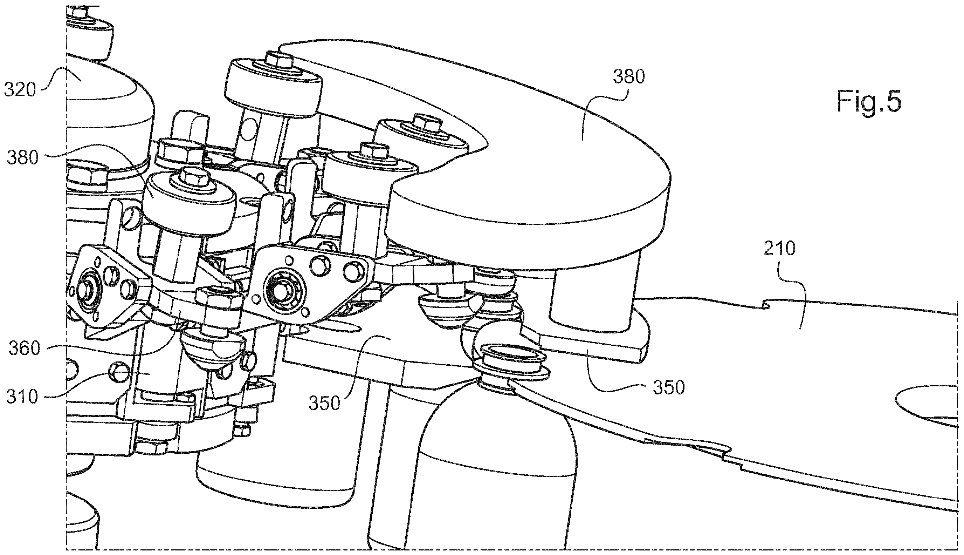

En référence plus particulièrement aux figures 2 à 5 et selon le premier mode de réalisation de l'invention, chaque organe de prise en charge 360 est monté sur le maillon correspondant du convoyeur souple 310 pour pivoter autour d'un axe horizontal parallèle à une direction locale de déplacement du convoyeur souple 310 de telle manière qu'en position active l'organe de prise en charge 360 ait un doigt abaissé pour être engagé dans le goulot d'un récipient et en position inactive le doigt du dispositif de prise en charge 360 soit relevé pour être dégagé du goulot du récipient.

Les moyens de commande comprennent ici une came 370 solidaire du convoyeur 110 de la première machine 100 et agencé pour maintenir les organes de prise en charge 360 dans leur position inactive lorsque le convoyeur 110 est en prise avec les récipients et pour laisser les organes de prise en charge 360 revenir dans leur position active sous l'effet des moyens de rappel élastique lorsque le convoyeur 110 est dégagé des récipients. Les moyens de rappel élastique relient chaque organe de prise en charge 360 et le maillon sur lequel il est monté.

Le fonctionnement de l'installation va maintenant être décrit. On note que des récipients ont déjà été chargés sur le convoyeur souple 310.

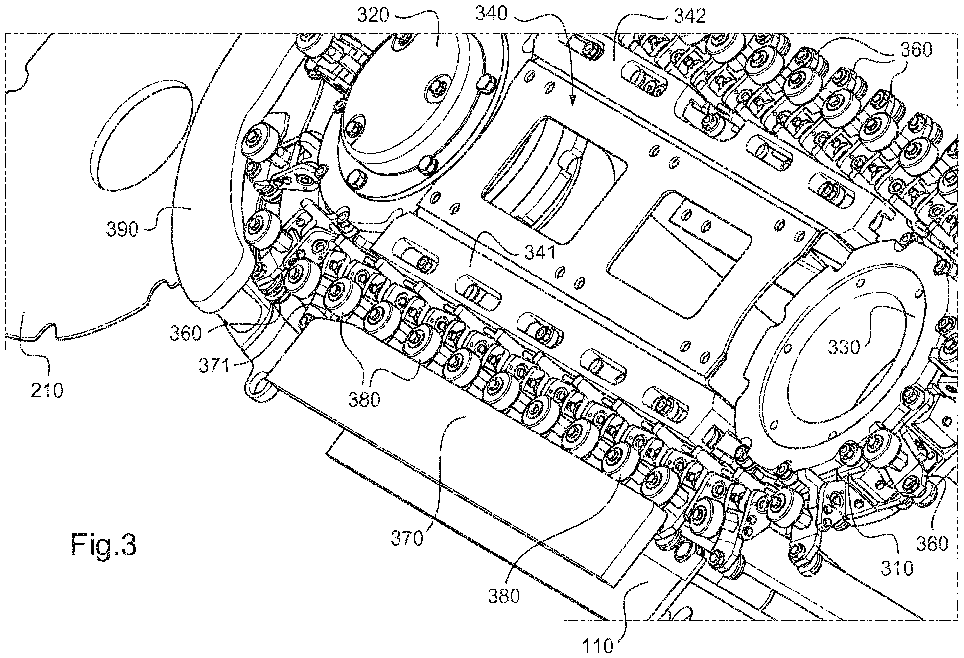

On comprend que les récipients qui viennent d'être soufflés reposent à la sortie de la machine 100 sur les rails 350 et sont évacués par le convoyeur de sortie 110 qui est amené en prise avec lesdits récipients en une première position (figure 2) avant d'être déplacé le long des rails 350 jusqu'à s'étendre en regard du tronçon rectiligne 311 dans une deuxième position (figure 3). Se faisant, la rampe frontale 371 de la came 370, qui s'étend en avant des alvéoles du peigne formant le convoyeur 110, rencontre des galets 380 solidaires des organes de préhension 360 et amène les organes de préhension 360 en position inactive. Les avancements du convoyeur souple 310 et celui du convoyeur 110 sont déterminés de telle manière qu'en deuxième position le convoyeur 110 amène des récipients au voisinage immédiat des récipients déjà chargés sur le convoyeur souple 310 de telle manière qu'entre deux lots successifs de récipients chargés sur le convoyeur souple, il n'y a pas d'organe de prise en charge 360 libre.

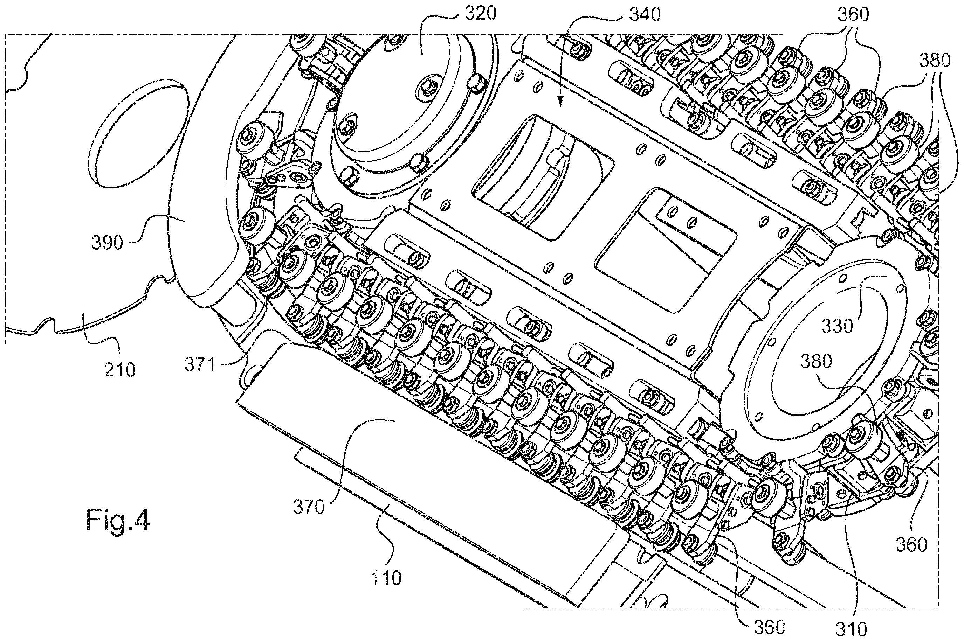

Le convoyeur 110 est alors reculé (figure 4) pour être dégagé des récipients. Avec ce mouvement de recul, la came 370 libère les galets 380 et les organes de prise en charge reviennent en position active sous l'action des moyens de rappel élastique.

Le convoyeur 110 est alors ramené dans sa première position pour être ramené en prise avec des récipients nouvellement soufflés.

Simultanément, le convoyeur souple 310 poursuit son mouvement et amène en regard du convoyeur 210 des récipients qui sont chargés au fur et à mesure dans les organes de préhension du convoyeur 210. Une came 390 s'enroulant en regard d'une partie du tronçon arrondi 312 coopère avec les galets 380 pour amener progressivement les organes de prise en charge 360 dans leur position inactive assurant le transfert des récipients du convoyeur souple 310 au convoyeur 210.

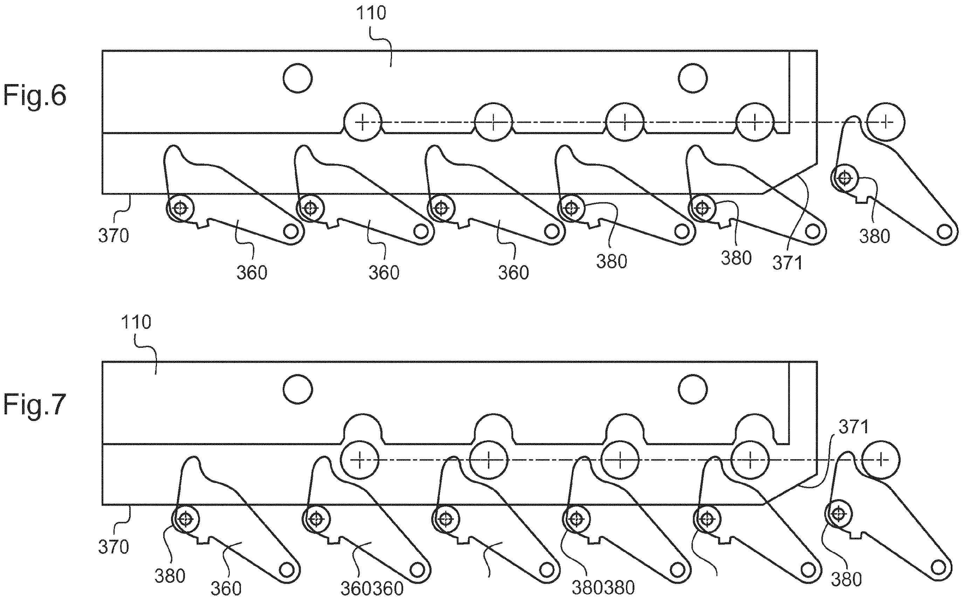

En référence aux figures 6 et 7, dans le dispositif de transfert conforme au deuxième mode de réalisation de l'invention, les organes de prise en charge 360 sont montés sur le convoyeur souple pour se déplacer latéralement par rapport au convoyeur souple.

Plus précisément, les organes de prise en charge 360 sont montés sur les maillons du convoyeur souple 310 pour pivoter autour d'un axe d'articulation perpendiculaire aux rails 350. Chaque organe de prise en charge 360 a une forme de levier ayant une extrémité reliée à l'axe d'articulation et une extrémité opposée agencée pour prendre appui sur le côté du goulot, ici au-dessus de la collerette. Le levier est également pourvu d'un galet 380 pour prendre appui sur la came 370 solidaire du convoyeur 110.

Le fonctionnement est identique à celui du premier mode de réalisation sauf en ce que les organes de prise en charge 360 pivotent entre leur position active (figure 7) et leur position inactive (figure 6) selon une trajectoire en arc de cercle horizontale et non plus verticale.

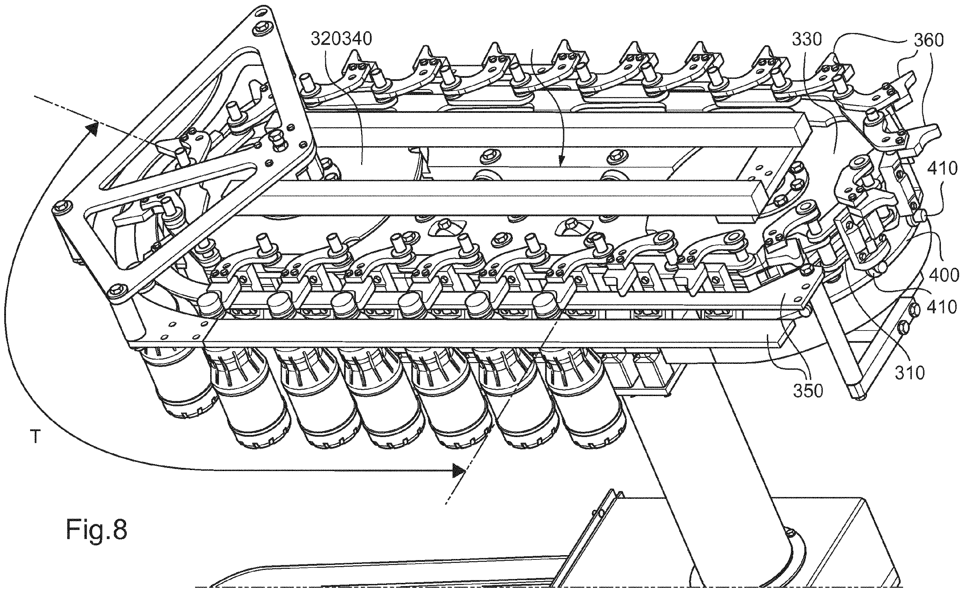

En référence à la figure 8 et selon le troisième mode de réalisation de l'invention, chaque organe de prise en charge 360 est monté pour coulisser verticalement par rapport au convoyeur souple 310 entre sa position active et sa position inactive.

Les moyens de commande comprennent ici un chemin de came 400 s'étendant en regard du convoyeur souple et les organes de prise en charge 360 sont associés à un galet 410 roulant sur le chemin de came 400.

Bien entendu, l'invention n'est pas limitée aux modes de réalisation décrits mais englobe toute variante entrant dans le champ de l'invention telle que définie par les revendications.

En particulier, le dispositif de transfert selon l'invention peut être utilisé dans tout type d'installation de traitement d'articles, entre deux machines fonctionnant selon des pas d'avancement différents.

Les organes de prise en charge peuvent avoir une structure différente et être formés par exemple de pinces.

Le convoyeur souple peut être formé d'une bande déformable.

Le convoyeur de la première machine est un convoyeur d'entrée et le convoyeur de la deuxième machine est un convoyeur de sortie ou inversement.

Avantageusement, la poulie motrice supporte le tronçon arrondi du convoyeur souple du dispositif de transfert.

Les moyens de commande peuvent avoir une structure différente de celle décrite. Les moyens de commande des organes de prise en charge peuvent être agencés pour amener les organes de prise en charge en position active dans une zone de transfert des articles s'étendant à cheval sur au moins une partie du tronçon rectiligne 311 et au moins une partie adjacente du tronçon arrondi 312 et en position inactive hors de cette zone au moins aux deux extrémités de celle-ci, ou en variante dans une ou plusieurs autres zones que celles mentionnées ci-dessus.

## Revendications

1. Dispositif (300) de transfert d'articles entre une première machine (100) fonctionnant avec un déplacement intermittent des articles selon un premier pas prédéterminé et une seconde machine (200) fonctionnant avec un déplacement continu des articles selon un deuxième pas prédéterminé, le dispositif comprenant un convoyeur souple (310) s'étendant autour d'au moins deux poulies (320, 330) pour avoir au moins un tronçon rectiligne (311) en regard d'un convoyeur de la première machine et un tronçon arrondi (312) en regard d'un convoyeur de la deuxième machine, le convoyeur souple du dispositif portant en saillie latérale des organes de prise en charge (360) des articles fixés à intervalles réguliers de telle manière que les organes de prise en charge aient un pas correspondant au premier pas dans ledit tronçon rectiligne et ledit tronçon arrondi a un rayon tel que les organes de prise en charge aient un pas correspondant au deuxième pas dans le tronçon arrondi, **caractérisé en ce que** le dispositif comprend au moins un rail de guidage (350) auquel les articles sont suspendus, le rail de guidage s'étendant le long du tronçon rectiligne (311) et le long d'au moins une partie du tronçon arrondi (312), et **en ce que** les organes de prise en charge (360) sont agencés pour être mobiles entre une position active au voisinage du rail de guidage (350) pour prendre contact avec les articles et une position inactive escamotée dans lesquels les articles échappent au contact des organes de prise en charge, le dispositif comprenant des moyens de commande des organes de prise en charge agencés pour amener les organes de prise en charge en position active dans une zone de transfert des articles s'étendant à cheval sur au moins une partie du tronçon rectiligne (311) et au moins une partie adjacente du tronçon arrondi (312) et en position inactive hors de cette zone au moins au deux extrémités de celle-ci.

2. Dispositif selon la revendication 1, dans lequel le convoyeur (110) de la première machine est un convoyeur d'entrée et le convoyeur (210) de la deuxième machine est un convoyeur de sortie.

3. Dispositif selon la revendication 1, dans lequel les organes de prise en charge (360) sont agencés pour pousser les articles le long du rail de guidage.

4. Dispositif selon la revendication 1, dans lequel les organes de prise en charge sont montés pour coulisser verticalement par rapport au convoyeur souple (310).

5. Dispositif selon la revendication 4, dans lequel les moyens de commande comprennent un chemin de came s'étendant en regard du convoyeur souple (310) et les organes de prise en charge (360) sont associés à un galet roulant sur le chemin de came.

6. Dispositif selon la revendication 1, dans lequel les organes de prise en charge (360) sont montés sur le convoyeur souple (310) pour se déplacer latéralement par rapport au convoyeur souple.

7. Dispositif selon la revendication 1, dans lequel les organes de prise en charge (360) sont montés sur le convoyeur souple (310) pour pivoter autour d'un axe horizontal parallèle à une direction locale de déplacement du convoyeur souple.

8. Dispositif selon la revendication 6 ou la revendication 7, dans lequel les moyens de commande comprennent un chemin de came (370) solidaire du convoyeur (110) de la première machine (100) et agencé pour maintenir les organes de prise en charge (360) dans leur position inactive lorsque le convoyeur est en prise avec les articles.

9. Dispositif selon la revendication 8, dans lequel le convoyeur (110) de la première machine est un peigne à mouvement rectiligne alternatif.

10. Dispositif selon la revendication 1, dans lequel le convoyeur souple (310) est une chaîne ayant des maillons sur chacun desquels est monté un des organes de prise en charge (360).

11. Dispositif selon la revendication 10, comprenant un organe de guidage et de tension (340) de la chaîne comportant deux patins montés entre deux tronçons rectilignes (311, 313) de la chaîne pour prendre appui sur ceux-ci, les deux patins étant reliés par des moyens d'entretoisement élastique.

12. Installation de conditionnement comprenant une machine de soufflage (100) de récipients avec un convoyeur de sortie à déplacement rectiligne intermittent selon un premier pas prédéterminé et une machine de remplissage (200) des récipients avec un convoyeur d'entrée à déplacement rotatif continu, **caractérisé en ce que** l'installation comprend un dispositif de transfert (300), conforme à l'une quelconque des revendications précédentes, installé entre la machine de soufflage et la machine de remplissage de telle manière que le tronçon rectiligne (311) s'étende en regard du convoyeur de sortie de la machine de soufflage et le tronçon arrondi (312) tangent au convoyeur d'entrée de la machine de remplissage, et **en ce que** le dispositif comprend une poulie motrice (320) pilotée par la machine de remplissage.

13. Installation selon la revendication 12, dans laquelle la poulie motrice (320) supporte le tronçon arrondi (312) du convoyeur souple (310) du dispositif de transfert (300).

## Patentansprüche

1. Vorrichtung (300) zur Übertragung von Gegenständen zwischen einer ersten Maschine (100), die mit einer intermittierenden Bewegung der Gegenstände gemäß einem ersten vorgegebenen Schritt arbeitet, und einer zweiten Maschine (200), die mit einer kontinuierlichen Bewegung der Gegenstände gemäß einem zweiten vorgegebenen Schritt arbeitet, wobei die Vorrichtung einen flexiblen Förderer (310) umfasst, der sich um mindestens zwei Rollen (320, 330) erstreckt, um mindestens einen geradlinigen Abschnitt (311) gegenüber einem Förderer der ersten Maschine und einen abgerundeten Abschnitt (312) gegenüber einem Förderer der zweiten Maschine zu haben, wobei der flexible Förderer der Vorrichtung seitlich vorstehende, in regelmäßigen Abständen befestigte Übernahmeelemente (360) zur Übernahme von Gegenständen trägt, derart, dass die Übernahmeelemente einen Schritt haben, der dem ersten Schritt in dem genannten geradlinigen Abschnitt entspricht, und der genannte abgerundete Abschnitt einen Radius hat, so dass die Übernahmeelemente einen Schritt haben, der dem zweiten Schritt in dem abgerundeten Abschnitt entspricht, **dadurch gekennzeichnet, dass** die Vorrichtung mindestens eine Führungsschiene (350) umfasst, an der die Gegenstände aufgehängt sind, wobei sich die Führungsschiene entlang des geradlinigen Abschnittes (311) und entlang mindestens eines Teils des abgerundeten Abschnittes (312) erstreckt, und dass die Übernahmeelemente (360) so ausgebildet sind, dass sie zwischen einer aktiven Position nahe der Führungsschiene (350) zur Kontaktaufnahme mit den Gegenständen und einer ausgerückten inaktiven Position beweglich sind, in der die Gegenstände außer Kontakt mit den Übernahmeelementen treten, wobei die Vorrichtung Steuermittel zum Steuern der Übernahmeelemente umfasst, die so ausgebildet sind, dass sie die Übernahmeelemente in die aktive Position in einer Übergabezone zur Übergabe der Gegenstände bringen, die sich über mindestens einen Teil des geradlinigen Abschnittes (311) und mindestens einen angrenzenden Teil des abgerundeten Abschnittes (312) erstreckt, sowie in eine inaktive Position außerhalb dieser Zone, zumindest an beiden Enden dieser Zone.

2. Vorrichtung nach Anspruch 1, bei der der Förderer (110) der ersten Maschine ein Einlassförderer und der Förderer (210) der zweiten Maschine ein Auslassförderer ist.

3. Vorrichtung nach Anspruch 1, bei der die Übernahmeelemente (360) so ausgebildet sind, dass sie die Gegenstände die Führungsschiene entlang schieben.

4. Vorrichtung nach Anspruch 1, bei der die Übernahmeelemente in Bezug auf den flexiblen Förderer (310) vertikal verschiebbar gelagert sind.

5. Vorrichtung nach Anspruch 4, bei der die Steuermittel eine Nockenbahn umfassen, die sich gegenüber dem flexiblen Förderer (310) erstreckt, und die Übernahmeelemente (360) mit einer Rolle verbunden sind, die auf der Nockenbahn rollt.

6. Vorrichtung nach Anspruch 1, bei der die Übernahmeelemente (360) auf dem flexiblen Förderer (310) angebracht sind, um sich seitlich in Bezug auf den flexiblen Förderer zu verschieben.

7. Vorrichtung nach Anspruch 1, bei der die Übernahmeelemente (360) auf dem flexiblen Förderer (310) angebracht sind, um sich um eine horizontale Achse zu verschwenken, die parallel zu einer lokalen Bewegungsrichtung des flexiblen Förderers ist.

8. Vorrichtung nach Anspruch 6 oder Anspruch 7, bei der die Steuermittel eine Nockenbahn (370) umfassen, die fest mit dem Förderer (110) der ersten Maschine (100) verbunden und so ausgebildet ist, dass sie die Übernahmeelemente (360) in ihrer inaktiven Position hält, wenn der Förderer in Eingriff mit den Gegenständen steht.

9. Vorrichtung nach Anspruch 8, bei der der Förderer (110) der ersten Maschine ein Kamm mit hin- und hergehender geradliniger Bewegung ist.

10. Vorrichtung nach Anspruch 1, bei der der flexible Förderer (310) eine Kette ist, die Glieder hat, an denen jeweils eines der Übernahmeelemente (360) angebracht ist.

11. Vorrichtung nach Anspruch 10, umfassend ein Element (340) zum Führen und Spannen der Kette, das zwei Kufen umfasst, die zwischen zwei geradlinigen Abschnitten (311, 313) der Kette angebracht sind, um an diesen zur Anlage zu kommen, wobei die beiden Kufen über elastische Abstandshaltemittel verbunden sind.

12. Verpackungsanlage, umfassend eine Behälterblasmaschine (100) mit einem Auslassförderer mit intermittierender geradliniger Bewegung gemäß einem ersten vorgegebenen Schritt und eine Behälterabfüllmaschine (200) mit einem Einlassförderer mit kontinuierlicher Drehbewegung, **dadurch gekennzeichnet**, das die Anlage eine Übergabevorrichtung (300) gemäß einem der vorhergehenden Ansprüche umfasst, die zwischen der Blasmaschine und der Abfüllmaschine derart installiert ist, dass sich der geradlinige Abschnitt (311) gegenüber dem Auslassförderer der Blasmaschine erstreckt und der abgerundete Abschnitt (213) tangential zum Einlassförderer der Abfüllmaschine ist, und dass die Vorrichtung eine Antriebsrolle (320) umfasst, die von der Abfüllmaschine gesteuert wird.

13. Anlage nach Anspruch 12, bei der die Antriebsrolle (320) den abgerundeten Abschnitt (312) des flexiblen Förderers (310) der Übergabevorrichtung (300) trägt.

## Claims

1. Device (300) for transferring articles between a first machine (100) implementing intermittent movement of the articles at a first predetermined pitch, and a second machine (200) implementing continuous movement of the articles at a second predetermined pitch, the device comprising a flexible conveyor (310) extending around at least two pulleys (320, 330) so as to have at least one rectilinear segment (311) facing a conveyor of the first machine and a rounded segment (312) facing a conveyor of the second machine, the flexible conveyor of the device carrying laterally-projecting article-handling members (360) arranged at regular intervals in such a manner that the handling members are at a pitch corresponding to the first pitch in said rectilinear segment, and said rounded segment has a radius such that the handling members are at a pitch corresponding to the second pitch in the rounded segment, **characterized in that** the device includes at least one guide rail (350) from which the articles are suspended, the guide rail extending along the rectilinear segment (311) and along at least a portion of the rounded segment (312) and **characterized in that** the handling members (360) are arranged to be movable between an active position in the vicinity of the guide rail (350) for making contact with the articles, and a retracted inactive position in which the articles escape from contact with the handling members, the device having control means for controlling the handling members and arranged to bring the handling members into the active position in an article-transfer zone that extends over at least a portion of the rectilinear segment (311) and at least an adjacent portion of the rounded segment (312), and an inactive position outside said zone, at least at the two ends of the zone.

2. Device according to claim 1, wherein the conveyor (110) of the first machine is an inlet conveyor and the conveyor (210) of the second machine is an outlet conveyor.

3. Device according to claim 1, wherein the handling members (360) are arranged to push the articles along the guide rail.

4. Device according to claim 1, wherein the handling members are mounted to slide vertically relative to the flexible conveyor (310).

5. Device according to claim 4, wherein the control means comprise a cam path extending facing the flexible conveyor (310), and the handling members (360) are associated with respective wheels running on the cam path.

6. Device according to claim 1, wherein the handling members (360) are mounted on the flexible conveyor (310) to move laterally relative to the flexible conveyor.

7. Device according to claim 1, wherein the handling members (360) are mounted on the flexible conveyor (310) to pivot about a horizontal axis parallel to a local movement direction of the flexible conveyor.

8. Device according to claim 6 or claim 7, wherein the control means comprise a cam path (370) secured to the conveyor (110) of the first machine (100) and arranged to keep the handling members (360) in their inactive position while the conveyor is engaged with the articles.

9. Device according to claim 8, wherein the conveyor (110) of the first machine is a comb that performs reciprocating rectilinear movement.

10. Device according to claim 1, wherein the flexible conveyor (310) is a chain having links, each of which has one of the handling members (360) mounted thereon.

11. Device according to claim 10, having a member (340) for guiding and tensioning the chain, which member comprises two skids mounted between two rectilinear segments (311, 313) of the chain so as to bear against the segment, the two skids being connected together by resilient spacer means.

12. Packaging installation comprising a container-blower machine (100) with an outlet conveyor that implements intermittent rectilinear movement at a first predetermined pitch, and a container-filler machine (200) with an inlet conveyor that implements continuous rotary movement, the installation being **characterized in that** it includes a transfer device (300) according to any preceding claim and installed between the blower machine and the filler machine in such a manner that the rectilinear segment (311) extends facing the outlet conveyor of the blower machine and the rounded segment (312) is tangential to the inlet conveyor of the filler machine, and **in that** the device includes a driven pulley (320) controlled by the filler machine.

13. Installation according to claim 12, wherein the driven pulley (320) supports the rounded segment (312) of the flexible conveyor (310) of the transfer device (300).
